# EUROPÄISCHE PATENTSCHRIFT

(11) **EP 1 338 630 B1**
(45) Veröffentlichungstag und Bekanntmachung des Hinweises auf die Patenterteilung: **17.01.2007**
(21) Anmeldenummer: 03003296.5
(22) Anmeldetag: 25.02.2003
(51) Int. Cl.: C09D 11/00, C09D 11/06

(54) **Offsetdruckfarbe und Verfahren zur Herstellung einer Offsetdruckfarbe**
Offset ink and process for providing an offset ink
Encre pour impression offset et méthode d'obtention d'une encre pour impression offset

(30) Priorität: 25.02.2002 DE 10209013
(43) Veröffentlichungstag der Anmeldung: 27.08.2003
(73) Patentinhaber: Epple Druckfarben AG, 86356 Neusäss-Augsburg (DE)
(72) Erfinder: Eisele-Kohler, Artur, Dr., 86152 Augsburg (DE); Epple, Carl, Dr., 86150 Augsburg (DE)
(74) Vertreter: Regelmann, Thomas

(56) Entgegenhaltungen:
- FR-A- 2 745 294
- US-A- 5 567 747
- US-A- 5 889 084

## Beschreibung

Die Erfindung betrifft eine Offsetdruckfarbe, umfassend Farbpigmente und ein Bindemittel für die Farbpigmente.

Die Erfindung betrifft ferner ein Verfahren zur Herstellung einer Offsetdruckfarbe, welche ein Bindemittel und Farbpigmente umfaßt.

Offsetdruckfarben werden üblicherweise aus einer Mischung eines Bindemittels, eines Farbmittels und von Druckhilfsmitteln hergestellt. Als Rohstoffe für die Bindemittelherstellung dienen dabei beispielsweise trocknende Öle, Hartharze, Mineralöle und Weichharze. Darüber hinaus sind bei einer UV-Druckfarbe Photoinitiatoren sowie Kunststoffmonomere und Kunststoffpräpolymere, welche unter UV-Lichteinwirkung sich und andere Bindemittelbestandteile vernetzen und so eine Trocknung der Farbe bewirken, Bestandteile des Bindemittels (siehe H. Teschner, "Offset-Drucktechnik", Fellbach, 10. Auflage, 1997, Seite 13/5).

In der US 5,567,747 wird eine Offsetdruckfarbe mit einem Epoxidesterharz als Bindemittel beschrieben, welches unter Einwirkung eines Metallsalzes als Trockenstoff vernetzt werden kann. Die in der FR 2 745 294 beschriebene Offsetdruckfarbe enthält als Bindemittel ein Epoxidharz, welches unter Einwirkung von ionisierender Strahlung härtbar ist.

Der Erfindung liegt die Aufgabe zugrunde, Offsetdruckfarben mit verbesserten Eigenschaften zu schaffen.

Diese Aufgabe wird bei einer Offsetdruckfarbe der eingangs genannten Art erfindungsgemäß dadurch gelöst, daß das Bindemittel mindestens einen epoxidierten Fettsäureester umfaßt, welcher durch ein Feuchtmittel unter Öffnung eines Oxiranrings aktiviert eine Trocknung der Offsetdruckfarbe einleitet.

Das Bindemittel einer Offsetdruckfarbe umfaßt mindestens eine Komponente, welche nach einem Druckvorgang eine Vernetzung des Bindemittels einleitet und so letztendlich eine Trocknung der Druckfarbe bewirkt. Das Bindemittel einer erfindungsgemäßen Offsetdruckfarbe umfaßt hierzu einen epoxidierten Fettsäureester. Es hat sich gezeigt, daß aufgrund dieses mindestens einen epoxidierten Fettsäureesters während des Trocknungsvorgangs nur sehr geringe Mengen von geruchsbelästigenden gasförmigen Spaltprodukten entstehen und alternativ oder zusätzlich die Offsetdruckfarbe nach dem Trocknungsvorgang einen außergewöhnlich hohen Glanz aufweist.

Aus dem Stand der Technik sind oxidativ trocknende Offsetdruckfarben bekannt. Sie trocknen unter Einwirkung von Luftsauerstoff, wobei ungesättigte Moleküleinheiten mit Sauerstoff reagieren und über diesen inter- und intramolekular miteinander vernetzen. Parallel zur oxidativen Vernetzungsreaktion laufen Nebenreaktionen ab, die zur Bildung von Spaltprodukten und zu deren Oxidation führen. Durch Trockner wie beispielsweise Cobalt- oder Mangansalze wird eine oxidative Trocknung beschleunigt. Dabei dienen diese Metallsalze als Katalysatoren, wobei sie eine Sauerstoffaufnahme aus der Luft und so die Vernetzung des Bindemittels fördern. Die Metallsalze katalysieren auch Spaltungsreaktionen von Kohlenstoff-Kohlenstoff Bindungen und bewirken dabei eine Oxidation der entstehenden Spaltprodukte und so eine vermehrte Bildung von geruchsbelästigenden Spaltprodukten. Oxidativ trocknende Offsetdruckfarben enthalten in der Regel Trockner.

Bei der erfindungsgemäßen Offsetdruckfarbe ist ein Zusatz zur Druckfarbe von oxidativ wirkenden Trocknern oder von Katalysatorvorläufern, die beispielsweise unter Licht- oder Wärmeeinwirkung eine katalytisch aktive, eine Trocknung der Druckfarbe bewirkende Komponente freisetzen, nicht erforderlich. In einem dem Bindemittel einer erfindungsgemäßen Offsetdruckfarbe zugesetzten epoxidierten Fettsäureester ist der für eine Sauerstoffverbrückung des Bindemittels benötigte Sauerstoff bereits intramolekular vorhanden. Die durch den epoxidierten Fettsäureester eingeleitete Vernetzungsreaktion wird durch einen Bestandteil eines Feuchtmittels, welcher mit dem Feuchtmittel beim Druckvorgang in die Druckfarbe eindringt, ausgelöst.

Ein Feuchtmittel, das der Drucktechniker auch als Wischwasser bezeichnet, ist ein Flüssigkeitsgemisch zur Feuchtung, d. h. zur Benetzung einer Flachdruckform. Feuchtmittel bestehen überwiegend aus Wasser und enthalten Zusätze von beispielsweise Säuren, Alkoholen, Netzmitteln, Puffersubstanzen und Konservierungsmitteln. Insbesondere Netzmittel und Alkohole haben einen Einfluß auf die Oberflächenspannung des Feuchtmittels, wodurch eine Benetzung einer Offsetdruckplatte mit dem Feuchtmittel beeinflußt wird.

Während des Druckvorgangs werden hydrophile Stellen einer Flachdruckform mit Feuchtmittel mittels eines Feuchtwerks vor dem Einfärben benetzt, um die druckabstoßenden Eigenschaften dieser nichtdruckenden Stellen aufrechtzuerhalten. Beim Druckvorgang wirken Feuchtmittel somit als Trennmittel gegen die Auftragung einer höher viskosen Druckfarbenschicht.

Während des Druckvorgangs nimmt die Druckfarbe Feuchtmittel auf unter Bildung einer Wasser-Öl-Emulsion, was als Druckfarben-Feuchtmittel-Gleichgewicht bezeichnet wird. Dieses Gleichgewicht ist abhängig von den Eigenschaften der Druckfarbe, wie beispielsweise der Oberflächenspannung und der Fähigkeit, Wasser zu emulgieren, und den Eigenschaften des Feuchtmittels, wie beispielsweise der Oberflächenspannung sowie zum einen der Fähigkeit, nichtdruckende Bereiche einer Druckplatte zu benetzen und zum anderen der Fähigkeit, Druckfarbe nicht zu emulgieren.

Wichtige Kennzeichnungsgrößen eines Feuchtmittels sind der Härtegrad seines Wasserbestandteils und der pH-Wert. Der Wasserbestandteil eines drucktechnisch geeigneten Feuchtmittels weist in der Regel eine Gesamthärte zwischen 8 und 12 °dH auf, wobei unter dem Begriff Gesamthärte der Gesamtgehalt an Härte zu verstehen ist, der durch Calcium- und Magnesium-Ionen hervorgerufen wird. Der für einen Druckprozeß gut geeignete pH-Wert liegt in einem Bereich von 4,8 bis 7,0. Um den pH-Wert des Feuchtmittels annähernd stabil zu halten, enthält es Puffersysteme wie beispielsweise Essigsäure/ Natriumacetat, Phosphorsäure/Natriumphosphat, Zitronensäure/Natriumacetat oder Zitronensäure/Natriumcitrat.

Darüber hinaus können Feuchtmittel zum Schutz von hydrophilen, nichtdruckenden Plattenbereichen vor Abtrocknung hydrophile Polymere enthalten.

Dabei werden als hydrophile Polymere beispielsweise Gummi arabicum, Polysacharide und/oder Cellulose-Derrivate eingesetzt.

Eine Trocknung der erfindungsgemäßen Druckfarbe wird durch ein in die Druckfarbe eindringendes Feuchtmittel bewirkt, welches den epoxidierten Fettsäureester unter Öffnung eines Oxiranrings aktiviert. Das Feuchtmittel kann dazu anionische, nucleophile, kationische und/oder elektrophile Bestandteile und/oder Radikale enthalten.

Eine Addition einer nucleophilen Substanz oder einer nucleophilen anionischen Substanz an einen Oxiranring des epoxidierten Fettsäureesters führt zur Bildung eines nucleophilen Oxoanions, welches sich wiederum unter Bildung eines Oxoanions bzw. eines Carbanions an eine Oxiran- bzw. ungesättigte Einheit einer Bindemittelkomponente addiert. Die dabei entstehenden nucleophilen Oxo- und Carbanionen setzen die nucleophile Additionsreaktion oder auch anionische Polymerisation fort und bewirken so letztendlich eine Vernetzung des Bindemittels. Die Geschwindigkeit der durch die nucleophilen und/oder anionischen Substanzen des Feuchtmittels ausgelösten Vernetzungsreaktion läßt sich unter anderem über die Konzentration an nucleophilen und/oder anionischen Substanzen im Feuchtmittel variieren und damit steuern.

Hingegen führt eine Addition einer elektrophilen Substanz oder einer elektrophilen kationischen Substanz an einen Oxiranring des epoxidierten Fettsäureesters zur Bildung eines elektrophilen Carbeniumions, welches sich seinerseits unter Bildung eines Carbeniumions an eine Oxiran- bzw. ungesättigte Einheit einer Bindemittelkomponente addiert. Die dabei entstehenden elektrophilen Carbeniumionen setzen die elektrophile Additionsreaktion oder auch eine kationische Polymerisation fort und bewirken so letztendlich eine Vernetzung des Bindemittels. Die Geschwindigkeit der durch die elektrophilen bzw. elektrophilen kationischen Bestandteile des Feuchtmittels ausgelösten Vernetzungsreaktion läßt sich unter anderem über die Konzentration an elektrophilen und/oder kationischen Substanzen im Feuchtmittel einstellen.

Darüber hinaus kann der epoxidierte Fettsäureester auch durch Radikale aktiviert werden und so eine Trocknung der Offsetdruckfarbe einleiten. Als Radikal kommt insbesondere molekularer Sauerstoff in Betracht, der sich während des Druckverfahrens durch ständige Verwirbelung des Feuchtmittels in diesem anreichert. Eine Anlagerung eines Radikals an den epoxidierten Fettsäureester verläuft nach einem radikalischen Additionsmechanismus und die nachfolgende Vernetzung des Bindemittels nach einem der radikalischen Polymerisation gleichendem.

Darüber hinaus wurde festgestellt, daß die erfindungsgemäße Offsetdruckfarbe eine ausgezeichnete Scheuerfestigkeit aufweist, was ein Überlackieren von Druckprodukten, wie es bei konventionellen geruchsarmen Druckfarben zur Verfestigung der Bindemittelmatrix durchgeführt werden muß, überflüssig macht.

Da die erfindungsgemäße Offsetdruckfarbe während des Trocknungsvorgangs nur eine äußerst geringe Menge von geruchsbelästigenden gasförmigen Spaltprodukten absondert und gleichzeitig eine ausgezeichnete Scheuerfestigkeit aufweist, ist sie hervorragend für das Bedrucken von Lebensmittelverpackungen geeignet, insbesondere für empfindliche Füllgüter wie Teigwaren, Schokolade, Tabakwaren etc., welche durch die gasförmigen Spaltprodukte der oxidativen Farbtrocknung ihren Geschmack und ihren Geruch besonders leicht und schnell verändern würden. Insbesondere eignet sich eine erfindungsgemäße Offsetdruckfarbe für das Bedrucken von Verpackungen für derartig empfindliche Lebens-, Genußmittel und Pharmaka, bei denen aufgrund gesundheitlicher Aspekte auf die Verwendung von oxidativ trocknenden Druckfarben verzichtet werden muß und deshalb die Verwendung von Dispersionslacken auf wässriger Basis vorgezogen wird.

Mit dem vorhergehend beschriebenen Effekt der geringen Spaltprodukt-, Aldehyd- und Ketonentwicklung im Zusammenhang stehend ist, daß eine erfindungsgemäße Offsetdruckfarbe ein äußerst geringes Kontaktvergilbungspotential und ein äußerst geringes Matt-/Glanzeffektpotential aufweist. Die Kontaktvergilbung entsteht beispielsweise durch den Kontakt eines Papierbogens mit einer schon bedruckten Oberfläche im Papierstapel. Dabei diffundieren Bestandteile der Offsetdruckfarbe sowie die bei ihrer Trocknung entstehenden Spaltprodukte von der bedruckten Seite auf die gegenüberliegende Papieroberfläche und führen dort zu einer gelblichen Färbung. Der Matt-/Glanzeffekt tritt auch heute noch immer wieder im Fortdruck auf. Er kann entstehen, wenn ein Bedruckstoff beidseitig mit oxidativ trocknenden Farben und Lacken bedruckt wird. Der Matt-/Glanzeffekt zeigt sich darin, daß das Druckbild einer Seite auf der bedruckten Rückseite markiert und dort zu sehen ist. Sowohl die Kontaktvergilbung als auch der Matt-/Glanzeffekt werden in der Druckersprache häufig pauschal als Geistereffekt bezeichnet.

Ferner hat es sich gezeigt, daß eine Offsetdruckfarbe durch den erfindungsgemäßen Zusatz mindestens eines epoxidierten Fettsäureesters einen außerordentlich hohen Glanz erhält. Der Glanz einer Farbe ist abhängig von der Adhäsion des Bindemittels am Pigment und von der Glätte der Farboberfläche nach dem Trocknungsvorgang, wobei glatte Farboberflächen einen hohen Glanz aufweisen, da an ihnen das auftreffende Licht gerichtet reflektieren wird.

Insbesondere liegt erfindungsgemäß der Anteil an epoxidierten Fettsäureestern in der Offsetdruckfarbe in einem Bereich von ca. 3 bis 40 Gew.%, wobei oberhalb des Maximalwerts keine weitere Verbesserung der vorstehend angesprochenen vorteilhaften Effekte erzielbar ist und unterhalb des Minimalwerts kein zufriedenstellendes Trocknungsverhalten der Offsetdruckfarbe beobachtet werden kann. Bei einem zu großen Anteil an hochviskosen expoxidierten Fettsäureestern kann sich das Wegschlagen über für den Druck ungeeignet lange Zeiträume erstrecken.

Epoxidierte Fettsäureester sind besonders kostengünstig beispielsweise durch Epoxidierung eines pflanzlichen Fettsäureesters herstellbar. Darüber hinaus haben epoxidierte Fettsäureester keinen nachteiligen Einfluß auf die Konsistenz der Druckfarbe und gewährleisten eine gute Verdruckbarkeit.

Epoxidierte Fettsäureester sind die epoxidierten Ester aller verzweigten und unverzweigten Monocarbonsäuren, sowohl die der niederen Fettsäuren mit 1 bis 7 Kohlenstoffatomen und die der mittleren Fettsäuren mit 8 bis 12 Kohlenstoffatomen als auch die der höheren Fettsäuren mit mehr als 12 Kohlenstoffatomen.

Besonders vorteilhaft ist es, wenn ein epoxidierter Fettsäureester einen epoxidierten Trifettsäureester und/oder einen epoxidierten Difettsäureester und/oder einen epoxidierten Monofettsäureester umfaßt.

Epoxidierte Trifettsäureester sind besonders kostengünstig durch Epoxidierung pflanzlicher Öle herstellbar, wie beispielsweise trocknende Öle mit einer Iod-Zahl ungefähr größer 170, beispielsweise Leinöl und Holzöl, halbtrocknende Öle mit einer Iod-Zahl in einem Bereich von 100 bis 170, wie beispielsweise Sojaöl, Rüböl, Sonnenblumenöl, Rapsöl und Safloröl, und nichttrocknende Öle mit einer Iod-Zahl kleiner 100, wie beispielsweise Olivenöl, Palmkernöl, Palmöl, Kokosöl und Ricinusöl. Dabei ist die Iod-Zahl eine Maßzahl für den Grad der Ungesättigtheit einer Verbindung.

Einen hohen Epoxidierungsgrad vorausgesetzt, sind epoxidierte Trifettsäureester insbesondere auf der Basis von trocknenden und halbtrocknenden Ölen bevorzugt, da sie einen hohen Anteil an Oxiran-Einheiten enthalten, welcher während des Trocknungsvorgangs einer Druckfarbe zu einer besonders starken Vernetzung des Bindemittels führt. Es kann auch daran gedacht werden, epoxidierte Trifettsäureester auf der Basis nichttrocknender Öle einzusetzen.

Epoxidierte Difettsäureester mit einem hohen Anteil an Oxiran-Einheiten bewirken wie die vorstehend genannten epoxidierten Trifettsäureester eine starke Vernetzung des Bindemittels. Darüber hinaus läßt sich die Viskosität einer Druckfarbe über den Anteil an epoxidierten Difettsäureestern besonders vorteilhaft einstellen. Epoxidierte Difettsäureester sind durch Epoxidierung von Difettsäureestern herstellbar, welche beispielsweise durch Umesterung von pflanzlichen Ölen und Fetten besonders kostengünstig zugänglich sind. Dabei sind Difettsäureester, welche auf der Basis von trocknenden und halbtrocknenden Ölen hergestellt sind oder solche die auf einer ungesättigten pflanzlichen Fettsäure, wie beispielsweise Ölsäure, Linolsäure, Linolensäure, Eicosapentaensäure, Erucasäure, Sorbinsäure, Elaeostearinsäure, oder auf einer ungesättigte synthetische Carbonsäuren, wie beispielsweise die Acrylsäure, basieren besonders bevorzugt.

Darüber hinaus können die einem epoxidierten Difettsäureester zugrundeliegenden Fettsäuren auch gesättigter Natur sein, wie beispielsweise Propionsäure, Buttersäure, Valeriansäure, Capronsäure, Caprylsäure, Caprinsäure, Undecansäure, Laurinsäure, Myristinsäure, Arachinsäure, Behensäure, Palmetinsäure und Stearinsäure. Es lassen sich beispielsweise auch längerkettige ungesättigte Alkohole mit Carbonsäuren wie Ameisensäure oder Essigsäure zu Ester verbinden, die sich expoxidieren lassen und zur Herstellung eines Bindemittels für eine Druckfarbe geeignet sind.

Epoxidierte Monofettsäureester bewirken wie epoxidierte Trifettsäureester und epoxidierte Difettsäureester eine Vernetzung des Bindemittels. Besonders vorteilhafterweise läßt sich das Wegschlageverhalten der Offsetdruckfarbe durch Anteil und Art des epoxidierten Monofettsäureesters einstellen. Das Wegschlagen ist im wesentlichen ein physikalischer Vorgang und beschreibt die Verarmung eines Farbfilms an dünnflüssigen Farbbestandteilen, die aufgrund von Kapillarwirkungen in den Bedruckstoff eindringen. Dadurch kommt es zu einer Erhöhung der Farbviskosität und zu einer Gelierung des gedruckten Farbfilms.

Epoxidierte Monofettsäureester sind durch Epoxidierung ungesättigter Monofettsäureester herstellbar, welche besonders kostengünstig beispielsweise durch Umesterung trocknender und halbtrocknender Öle zugänglich sind. Von den bei der Umesterung von pflanzlichen Ölen entstehenden ungesättigten Monofettsäureestern sind insbesondere die der Ölsäure, der Linolsäure, der Linolensäure, der Eicosapentaensäure, der Erucasäure, der Sorbinsäure und der Elaeostearinsäure bevorzugt. Auch ungesättigte synthetische Carbonsäureester sind beispielsweise durch einfache Umsetzung von ungesättigten Carbonsäuren mit Alkoholen sehr kostengünstig herzustellen.

Um das Wegschlageverhalten einer Offsetdruckfarbe für einen vorgegebenen Verwendungszweck besonders genau einstellen zu können, ist es vorteilhaft, wenn die Anzahl der Kohlenstoffatome eines Alkyl-Restes eines epoxidierten Monofettsäureesters im Bereich von 1 bis 20 liegt, wobei als Alkyl-Rest ein Methyl-, ein Ethyl-, ein Propyl-, ein Butyl-, ein tert.-Butyl-, ein Hexyl- und ein Ethylhexyl-Rest besonders bevorzugt ist. Um die Quellung einer Druckwalze gering zu halten, kann vorgesehen werden, den Anteil an Alkyl-Resten mit geringer Kohlenstoffzahl klein zu halten und dabei insbesondere Alkyl-Reste mit einer Kohlenstoffzahl zwischen ca. 10 und 20 einzusetzen.

Das Wegschlageverhalten einer Offsetdruckfarbe ist auf seinen jeweiligen Verwendungszweck abgestimmt, wobei beispielsweise die Art des Bedruckstoffs, die Maschinenlänge bzw. die Länge des Farbwegs und das Druckverfahren zu berücksichtigen sind. Beim Mehrfarbendruck in einer Einfarbendruckmaschine werden beispielsweise Druckfarben verwendet, die schnell wegschlagen, da beim Mehrfarbendruck in einer Einfarbendruckmaschine Naß-auf-Trocken gedruckt wird, d. h. die folgende Druckfarbe wird auf eine bereits trockene Farbe aufgedruckt, weshalb ein schnelles Antrocknen der Farbe für eine hohe Druckgeschwindigkeit von Vorteil ist. Dagegen werden für den Druck in einer Mehrfarbendruckmaschine Druckfarben verwendet, welche langsam wegschlagen, da in Mehrfarbendruckmaschinen Naß-in-Naß gedruckt wird, d. h., daß auf einen noch "nassen" Farbfilm der vorausgedruckten Farbe gedruckt wird, weshalb ein langsames Antrocknen der Druckfarbe erforderlich ist.

Um während des Trocknungsvorgangs möglichst geringe Mengen von Spaltprodukten zu erhalten und um bei der Trocknung einen hohen Vernetzungsgrad des Bindemittels zu erhalten, ist es besonders vorteilhaft, wenn der Doppelbindungsanteil in den vorstehend genannten epoxidierten Fettsäureestern möglichst gering ist, d. h. der Anteil an epoxidierten Doppelbindungen möglichst hoch ist. Deshalb sollte die Iod-Zahl eines epoxidierten Fettsäureesters möglichst klein sein, bevorzugt kleiner 10, insbesondere kleiner 5. Insbesondere sollte ein entsprechendes Molekül mindestens eine expoxidierte Doppelbindung enthalten.

Günstigerweise umfaßt eine erfindungsgemäße Offsetdruckfarbe Druckhilfsmittel in einem Bereich von ca. 0,5 bis 15 Gew.%, um einerseits ihre Verdruckbarkeit zu verbessern und um andererseits spezielle Eigenschaften der Druckfarbe zu erzielen, wie beispielsweise eine hohe Scheuerfestigkeit und/oder einen hohen Glanz.

Der Bindemittelanteil einer erfindungsgemäßen Druckfarbe liegt in einem Bereich von 30 bis 85 Gew.%, der Anteil an Farbpigmenten in einem Bereich von 10 bis 45 Gew.%, jeweils bezogen auf die Offsetdruckfarbe.

Ganz besonders günstig ist es, wenn das Bindemittel mindestens ein Harz mit einem Schmelzpunkt größer 120°C, bevorzugt im Bereich von 140 bis 220°C, und besonders bevorzugt im Bereich von ca. 160 bis 180°C umfaßt, um der Offsetdruckfarbe eine ausreichende Klebkraft zu verleihen. Dazu eignen sich insbesondere Hybridharze und/oder Kohlenwasserstoffharze und/oder phenolmodifizierte Harze, insbesondere phenolmodifizierte oder pentaerythritveredelte Kolophoniumharze, wobei der Anteil an Harzkomponenten bezogen auf das Bindemittel in einem Bereich von 30 bis 70 Gew.% liegt.

Besonders vorteilhafterweise umfaßt das Bindemittel mindestens ein Alkydharz mit einem Anteil kleiner 20 Gew.%, bezogen auf die Offsetdruckfarbe, um die Kratzfestigkeit und/oder den Glanz der Druckfarbe zu verbessern.

Zur Erzielung einer glatten, die Reibung verringernden Farboberfläche ist günstigerweise ein Scheuerschutz vorgesehen, welcher einen Anteil kleiner 8 Gew.%, bezogen auf die Offsetdruckfarbe, umfaßt. Dieser Scheuerschutz basiert beispielsweise auf einer Paste aus Teflon und/oder Polyethylen und/oder Fischer-Tropsch-Wachs mit einem Anteil von ca. 25 bis 40 Gew.% in Hartharz und/oder Alkydharz und/oder Öl. Bei dem Öl kann es sich beispielsweise um ein Mineralöl mit einem Siedebereich zwischen 280 und 310°C handeln.

Besonders vorteilhaft ist es, wenn die Viskosität einer Offsetdruckfarbe bei 23°C und einer Scherrate von 10 s⁻¹ in einem Bereich von 40 bis 200 Pa·s liegt, um eine gute Verdruckbarkeit der Druckfarbe zu gewährleisten.

Zur Herstellung einer geruchsarmen Offsetdruckfarbe wird das Bindemittel einer erfindungsgemäßen Offsetdruckfarbe als Lösungsmittel vorteilhafterweise einen Fettsäureester mit einem geringen Doppelbindungsanteil umfassen, um die Bildung von Spaltprodukten während des Trocknungsvorgangs weitgehend zu verhindern. Dazu ist es vorteilhaft, wenn der Fettsäureester eine Iod-Zahl kleiner 50, bevorzugt kleiner 30 und besonders bevorzugt kleiner 10, aufweist. Als Fettsäureester eignen sich insbesondere Trifettsäureester und/oder Difettsäureester und/oder Monofettsäureester, wobei als Difettsäureester und Monofettsäureester bevorzugt die Umesterungsprodukte nichttrocknender pflanzlicher Öle, wie beispielsweise Kokosester und Palmester, zum Einsatz kommen, wobei die Umesterungsprodukte pflanzliche Öle, d.h. Mono- und Difettsäureester, als Pflanzenester bezeichnet werden. Das Bindemittel einer erfindungsgemäßen geruchsarmen Druckfarbe sollte allgemein einen möglichst geringen Anteil an Doppelbindungen enthalten. Weiterhin eignen sich solche Trifettsäureester, Difettsäureester und Monofettsäureester, die auf gesättigten Carbonsäuren oder auf gesättigten vegetabilen Fettsäuren basieren, wie beispielsweise Ameisensäure, Essigsäure, Propionsäure, Buttersäure, Valeriansäure, Capronsäure, Caprylsäure, Caprinsäure, Undecansäure, Laurinsäure, Myristinsäure, Arachinsäure, Behensäure, Palmetinsäure und Stearinsäure.

Alternativ oder zusätzlich zu den Fettsäureestern mit kleiner Iod-Zahl enthält das Bindemittel einer erfindungsgemäßen Offsetdruckfarbe ein oder mehrere Mineralöle, welche überwiegend gesättigte Kohlenwasserstoffe enthalten.

Zur Herstellung einer Offsetdruckfarbe mit einem hohen Glanz umfaßt das Bindemittel nach einem zweiten Ausführungsbeispiel einer erfindungsgemäßen Offsetdruckfarbe vorteilhafterweise einen nichtepoxidierten Fettsäureester mit einer Iod-Zahl größer 100, bevorzugt größer 140 und besonders bevorzugt größer 170, um neben einer durch Oxirane bewirkten Trocknung auch eine oxidative Trocknung des Bindemittels zu bewirken. Dazu kommen insbesondere Sojaöl, Leinöl, Rüböl, Sonnenblumenöl, Rapsöl, Holzöl und/oder Safloröl zum Einsatz. Das Bindemittel sollte dabei in seinen epoxidierten Fettsäureestern möglichst viele Epoxidgruppen enthalten, welche für die entsprechende Reaktivität sorgen.

Die Druckhilfsmittel umfassen beispielsweise zum Schutz von Doppelbindungen ein Antioxidans mit einem Anteil von ca. 0,25 bis 3 Gew.%, bezogen auf die Offsetdruckfarbe. Beispielsweise wird Butylhydroxytoluol als Antioxidans eingesetzt. Leinöl (mit einer Viskosität von 0,6 Pa·s) kann mit einem Anteil zwischen 1 und 5 Gew.%, bezogen auf die Offsetdruckfarbe, in den Druckhilfsmitteln enthalten sein, um die Transportfähigkeit der Druckfarbe im Walzensystem zu erhöhen.

Die Druckhilfsmittel können ferner einen Trockner mit einem Metallgehalt umfassen, insbesondere Cobalt und Mangan. Cobalt dient als Oberflächentrockner und Mangan als Innentrockner. Das Cobalt wird beispielsweise in Form von Cobaltoktoat (CAS-Nr. 136-52-7) und das Mangan beispielsweise in der Form von Manganoktoat (CAS-Nr. 6535-19-9) zugefügt. Die Metallverbindungen sind in Öl, wie beispielsweise Leinöl, anderen pflanzlichen Ölen oder deren Derivaten und/oder Mineralölen gelöst.

Feuchtmittelbestandteile, welche den epoxidierten Fettsäureester durch Öffnung eines Oxiranrings aktivieren und so eine Trocknung der erfindungsgemäßen Druckfarbe einleiten, können nucleophile, anionische, elektrophile und/oder kationische Substanzen und/oder Radikale sein, wobei anionische und kationische Substanzen je nach Art mehr oder weniger starke nucleophile bzw. elektrophile Eigenschaften aufweisen. Selbstverständlich können nucleophile, anionische, elektrophile und kationische Substanzen sowie Radikale einzeln oder in beliebiger Kombination nebeneinander in dem Feuchtmittel vorliegen und jeweils den epoxidierten Fettsäureester aktivieren. Als nucleophiler Bestandteil können dem Feuchtmittel insbesondere Ammoniak und/oder primäre, sekundäre und/oder tertiäre Amine zugesetzt werden.

Als anionische Substanzen können dem Feuchtmittel beispielsweise Sulphat-, Chlorid-, Phosphat-, Nitrat-, Hydrogencarbonat- sowie Carboxylat- und Alkoholat-Ionen zugesetzt werden. In Abhängigkeit von der Natur des expoxidierten Fettsäureesters der erfindungsgemäßen Druckfarbe kann bereits die Konzentration der Hydroxid-Ionen des Feuchtmittels in einem pH-Wert-Bereich größer pH = 4,8 ausreichend sein, um den epoxidierten Fettsäureester ausreichend zu aktivieren und um so eine Trocknung der Druckfarbe einzuleiten und letztendlich zu bewirken.

Als elektrophile Bestandteile kann das Feuchtmittel beispielsweise jegliche Arten von Lewis-Säuren enthalten.

Als kationische Substanzen, welche eine Öffnung eines Oxiranrings des epoxidierten Fettsäureesters bewirken, sind insbesondere Protonen bevorzugt, wobei in Abhängigkeit von der Natur des epoxidierten Fettsäureesters die Protonenkonzentration bei einem pH-Wert kleinergleich 8 ausreichen kann, um eine Trocknung der erfindungsgemäßen Offsetdruckfarbe zu bewirken.

Auch der im Feuchtmittel befindliche Luftsauerstoff, der biradikalischer Natur ist, kann bereits bei geeigneter Wahl des epoxidierten Fettsäureesters eine Aktivierung dieser bewirken und eine Trocknung der Druckfarbe auf radikalischem Weg einleiten.

Ferner betrifft die Erfindung die Verwendung von epoxidierten Fettsäureestern für die Herstellung eines Bindemittels für eine Offsetdruckfarbe, insbesondere für eine erfindungsgemäße Offsetdruckfarbe der vorstehend genannten Art.

Die Erfindung betrifft ferner ein Verfahren zur Herstellung einer Offsetdruckfarbe, welche ein Pflanzenöl und/oder einen Pflanzenester und/oder ein Mineralöl, eine Hartharzkomponente, einen epoxidierten Fettsäureester und Farbpigmente umfaßt.

Es liegt dabei die Aufgabe zugrunde, ein Verfahren zu schaffen, welches eine Offsetdruckfarbe bereitstellt, die verbesserte Eigenschaften aufweist.

Diese Aufgabe wird erfindungsgemäß dadurch gelöst, daß die Hartharzkomponente in dem Pflanzenöl und/oder dem Pflanzenester und/oder dem Mineralöl bei einer Temperatur oberhalb von 140°C, bevorzugt in einem Bereich von ca. 150 bis 220°C, gelöst wird, und das Gemisch aus Hartharzkomponente und Pflanzenöl und/oder Pflanzenester und/oder Mineralöl auf eine Temperatur unterhalb von 140°C, bevorzugt auf eine Temperatur in einem Bereich von ca. 60 bis 120°C, abgekühlt wird, bei welcher der epoxidierte Fettsäureester dem vorstehend genannten Gemisch zugesetzt wird.

Das erfindungsgemäße Verfahren weist den Vorteil auf, daß bei einer Temperatur oberhalb von 140°C die Hartharzkomponente in einem Lösungsmittel leicht und schnell gelöst wird und daß die Zugabe des epoxidierten Fettsäureesters unterhalb einer Temperatur von 140°C zu dem vorstehend genannten Gemisch aus Hartharz und Öl thermisch bewirkte Vernetzungsreaktionen des Bindemittels durch die Oxiran-Einheiten des epoxidierten Fettsäureesters verhindert oder zumindest reduziert wird.

In dem erfindungsgemäßen Verfahren kann dem Lösungsmittel oder dem Gemisch aus Lösungsmittel und Hartharz entweder ober- oder unterhalb von 140°C ein Alkydharz zugegeben werden.

Die nachfolgende Beschreibung bevorzugter Ausführungsbeispiele dienen im Zusammenhang mit der Zeichnung der näheren Erläuterung der Erfindung. Es zeigen:
- Figur 1: eine schematische Darstellung der Zusammensetzung einer Offsetdruckfarbe und
- Figur 2: eine schematische Blockbild-Darstellung eines Verfahrens zur Herstellung einer erfindungsgemäßen Offsetdruckfarbe.

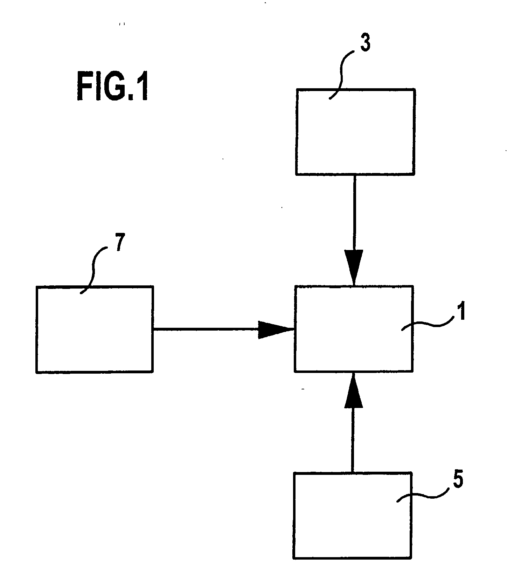

Offsetdruckfarben 1 umfassen, wie in Figur 1 schematisch gezeigt, als Bestandteile ein Bindemittel 3 in flüssiger Form, Farbmittel 5 in fester Form, wobei es sich hier insbesondere um Farbpigmente handelt, und Druckhilfsmittel 7.

Die Farbmittel sind die farbgebenden Bestandteile einer Druckfarbe, wobei für eine Offsetdruckfarbe anorganische und/oder organische Pigmente verwendet werden. Die Pigmente sind unlöslich im Bindemittel und können bunt oder unbunt sein.

Um Farbpigmente in einen verdruckbaren Zustand zu bringen, sind sie in dem Bindemittel dispergiert, so daß die Suspension beim Offsetdruck vom Farbkasten über das Farbwerk auf die Druckplatte und von dort über das Gummituch auf den Bedruckstoff übertragbar ist. Üblicherweise enthalten Bindemittel für den Offsetdruck nur einen sehr geringen Anteil an leichtflüchtigem Lösungsmittel, um beim langen Farbweg vom Farbkasten auf die zu bedruckende Unterlage ein vorzeitiges Trocknen der Druckfarbe zu verhindern.

Durch das Bindemittel ist eine Verdruckbarkeit von Pigmenten in feinster Dispersion, eine Verankerung der Pigmente auf einem Bedruckstoff durch Trocknung des Bindemittels und die Bildung eines Schutzfilms um die Pigmente, um diese vor mechanischem Abrieb zu schützen, gewährleistet.

Rohstoffe für die Bindemittelherstellung sind beispielsweise pflanzliche Öle, Mineralöle, Hartharze, Weichharze und Standöle sowie sonstige Komponenten.

Der Begriff pflanzliches Öl ist eine Sammelbezeichnung für feste, halbfeste oder flüssige, mehr oder weniger viskose Produkte von Pflanzen, welche im wesentlichen aus gemischten Glycerinestern höherer Fettsäuren mit gerader Anzahl von Kohlenstoffatomen bestehen. Fettsäureester sind die Ester aller unverzweigten, verzweigten, gesättigten und ungesättigten Fettsäuren, sowohl die der niederen Fettsäuren mit 1 bis 7 Kohlenstoffatomen und die der mittleren Fettsäuren mit 8 bis 12 Kohlenstoffatomen als auch die der höheren Fettsäuren mit mehr als 12 Kohlenstoffatomen.

Die Einteilung der Öle erfolgt nach ihrer Iod-Zahl, wobei Öle mit einer Iod-Zahl größer 170 als trocknende Öle, solche mit einer Iod-Zahl von 170 bis 100 als halbtrocknende Öle und solche mit einer Iod-Zahl kleiner 100 als nichttrocknende Öle bezeichnet werden.

Trocknende Öle sind beispielsweise Leinöl und Holzöl, halbtrocknende Öle sind beispielsweise Sojaöl, Rüböl, Sonnenblumenöl, Rapsöl und Safloröl, und nichttrocknende Öle sind beispielsweise Olivenöl, Palmkernöl, Palmöl, Kokosöl und Ricinusöl.

Die physikalische Beschaffenheit der Öle wird durch die Kettenlänge und die Ungesättigtheit der ihnen zugrundeliegenden Säuren bestimmt. Längerkettige und gesättigte Fettsäuren bedingen einen höheren, kürzerkettige oder ungesättigte einen tieferen Schmelzpunkt sowie eine ölige Beschaffenheit.

Nichttrocknende Öle, insbesondere solche mit hohem Anteil an gesättigten langkettigen Fettsäuren, werden aufgrund ihrer festen, halbfesten oder mehr viskosen Beschaffenheit nur bedingt in der Bindemittelherstellung eingesetzt. Solche Öle, insbesondere Palmkernöl, Palmöl oder Kokosöl, werden durch Umesterung mit Alkoholen und Diolen zu den entsprechenden Monofettsäureestern bzw. Difettsäureestern umgesetzt, welche in der Bindemittelherstellung unter der Bezeichnung Pflanzenester, wie beispielsweise Kokosester, Verwendung finden.

Mit steigendem Grad an Ungesättigtheit neigen Öle dazu, infolge von Autooxidation und Polymerisation zunehmend zu verharzen, wobei infolge der Autooxidation und der Desmolyse, dem enzymatischen oder oxidativen Abbau, übelriechende, kurzkettige Methylketone und/oder Aldehyde entstehen.

Mineralöle sind Destillationsprodukte des Erdöls und der Kohle. Sie bestehen vor allem aus einem Gemisch von gesättigten Kohlenwasserstoffen, welche im Gegensatz zu halbtrocknenden und trocknenden Ölen nicht durch Sauerstoff oxidiert werden und daher keine Vernetzung des Bindemittels bewirken. Mineralöle dienen beispielsweise als Lösungsmittel für verschiedene Harze und zur Einstellung der Viskosität einer Druckfarbe.

Das Bindemittel einer erfindungsgemäßen Offsetdruckfarbe gemäß einem ersten Ausführungsbeispiel umfaßt als Lösungsmittel ein Mineralöl und/oder einen Fettsäureester mit kleiner Iod-Zahl, um die Bildung der bei der oxidativen Trocknung entstehenden Spaltprodukte weitgehend zu vermeiden. Dabei kommen als Fettsäureester Trifettsäureester und/oder Difettsäureester und/oder Monofettsäureester mit einer Iod-Zahl kleiner 50, bevorzugt kleiner 30 und besonders bevorzugt kleiner 10, zum Einsatz. Neben Mineralölen und Trifettsäureestern eignen sich insbesondere Difettsäureester und Monofettsäureester, welche beispielsweise durch Umesterung nichttrocknender Öle wie Kokosöl, Palmöl und Palmkernöl hergestellt sind.

Das Bindemittel einer erfindungsgemäßen Offsetdruckfarbe nach einem zweiten Ausführungsbeispiel umfaßt als Lösungsmittel Fettsäureester mit einem hohen Anteil an Doppelbindungen. Dabei kommen Trifettsäureester und/oder Difettsäureester und/oder Monofettsäureester zum Einsatz, wobei ein Fettsäureester mit einer Iod-Zahl größer 100, besonders größer 140 und ganz besonders größer 170, bevorzugt sind. Als Trifettsäureester eignen sich für eine erfindungsgemäße Offsetdruckfarbe insbesondere Sojaöl und/oder Leinöl und/oder Holzöl.

Um die Zugkraft einer Druckfarbe zu erhöhen, werden dem Bindemittel Hartharze zugesetzt. Dabei werden sowohl veredelte Naturharze als auch Kunstharze verwendet, die in Öl gelöst werden.

Eine erfindungsgemäße Offsetdruckfarbe umfaßt als Harzharzkomponente ein Harz mit einem Schmelzpunkt größer 120°C, bevorzugt im Bereich von 140 bis 220°C und besonders bevorzugt im Bereich von ca. 160 bis 180°C. Als Hartharze eignen sich insbesondere Hybridharze und/oder Kohlenwasserstoffharze und/oder phenolmodifizierte Harze, insbesondere phenolmodifizierte oder pentaerythritveresterte Kolophoniumharze, welche mit einem Anteil in einem Bereich von 30 bis 70 Gew.% im Bindemittel enthalten sind.

Neben Hartharzen werden zur Bindemittelherstellung vor allem Alkydharze eingesetzt. Alkydharze werden durch Umsetzung von mehrwertigen Alkoholen mit mehrbasischen organischen Säuren erhalten. Alkydharze enthalten wie pflanzliche Öle Fettsäuren, die durch Sauerstoffaufnahme bzw. durch Oxirane vernetzen und trocknen können. Als synthetisches Produkt lassen sich die verschiedenartigsten Alkydharze für spezielle Einsatzbereiche herstellen. So bildet ein Alkydharz einen besonders kratzfesten Film, ein anderes einen besonders hochglänzenden.

Druckhilfsmittel, wie beispielsweise Drucköle, Scheuerschutzpasten, Frischhaltemittel und Trockner, werden eingesetzt, um die Verdruckbarkeit der Druckfarbe zu verbessern und spezielle Eigenschaften der Farbe zu erzielen. Dabei dienen sie im wesentlichen der Einstellung der Konsistenz, der Trocknung, der Scheuerfestigkeit und des Glanzes der Farbe.

Oxidativ trocknenden Farben werden Drucköle wie beispielsweise Leinöl und andere trocknende Öle zur Verringerung ihrer Klebrigkeit zugesetzt. Darüber hinaus verhindern sie ein Aufbauen (eine durch unzureichende Farbübertragung erfolgte Ansammlung von Druckfarbe auf Druckwalzen und/oder Gummitüchern).

Scheuerschutzpasten, wie beispielsweise Wachse, werden einer Druckfarbe zugesetzt, um glatte, die Reibung verringernde Farboberflächen zu erhalten.

Frischhaltemittel werden einer Druckfarbe zugesetzt, um beispielsweise ein vorzeitiges Antrocknen der Druckfarbe zu verhindern.

Trockner werden oxidativ trocknenden Druckfarben zugesetzt, um ihre Trocknung zu beschleunigen. Trockner sind beispielsweise in Lösungsmitteln oder Ölen gelöste Metallverbindungen, wie beispielsweise Cobaltsalze oder Mangansalze, wobei Cobalt als Oberflächentrockner und Mangan als Innentrockner dient.

An Druckfarben wird nicht nur die Forderung gestellt, daß sie mechanisch stabile, klebfreie Filme bilden. Wichtig ist zudem, daß der Trocknungsvorgang einer Druckfarbe in einem vertretbaren Zeitraum stattfindet.

Die physikalische Trocknung einer Druckfarbe beruht darauf, daß es auf einem frisch bedruckten Bogen zu einer sehr schnellen Ausfilterung von dünnflüssigen Farbbestandteilen kommt, welche aufgrund von Kapillarwirkungen in das Papier eindringen. Dieser als Wegschlagen bezeichnete Prozeß ist im wesentlichen ein physikalischer Vorgang. Dadurch kommt es zu einer Verarmung des Farbfilms an dünnflüssigen Farbbestandteilen und so zu einer plötzlichen Erhöhung der Farbviskosität. Der gedruckte Farbfilm beginnt zu gelieren, d. h. die Druckfarbe wird gelartig und schließlich wischfest.

Durch Aufnahme von Sauerstoff und insbesondere Luftsauerstoff beginnt die chemische bzw. oxidative Trocknung einer Druckfarbe, um so einen harten, scheuerfesten Druckfarbfilm zu bilden. Sie basiert auf der Vernetzung von ungesättigten Farbbestandteilen durch Sauerstoffbrücken. Dieser Trocknungsvorgang kann je nach Farbtyp und Bedruckstoff mehrere Stunden dauern. Durch Trockner kann die oxidative Trocknung beschleunigt werden. Cobalt-, Blei- und Mangansalze dienen dabei als Katalysatoren, die die Sauerstoffaufnahme fördern.

Während des Trocknungsvorgangs von oxidativ trocknenden Druckfarben entstehen insbesondere unter Verwendung von Trocknern größere Mengen von geruchsbelästigenden oxidierten Spaltprodukten, wie beispielsweise Aldehyde und Ketone.

Um die Bildung von übelriechenden oxidierten Spaltprodukten während des Trocknungsvorgangs weitgehend zu unterdrücken, umfaßt das Bindemittel einer erfindungsgemäßen Druckfarbe gemäß dem ersten Ausführungsbeispiel als Lösungsmittel bevorzugt einen nichtepoxidierten Fettsäureester mit einem geringen Doppelbindungsanteil. Dabei sind insbesondere Fettsäureester mit einer Iod-Zahl kleiner 50, besonders kleiner 30 und ganz besonders kleiner 10, bevorzugt. Als Fettsäureester eignen sich beispielsweise die Umesterungsprodukte nichttrocknender pflanzlicher Öle. Als bindemittelvernetzende Komponente umfaßt das Bindemittel einen epoxidierten Fettsäureester, in welcher der für eine Sauerstoffverbrückung von Bindemittelkomponenten benötigte Sauerstoff bereits intramolekular vorhanden ist. Alternativ oder zusätzlich zu einem nichtepoxidierten Fettsäureester umfaßt das Bindemittel ein oder mehrere Mineralöle.

Um eine Offsetdruckfarbe mit einem außergewöhnlich hohen Glanz zu schaffen, umfaßt das Bindemittel einer erfindungsgemäßen Offsetdruckfarbe gemäß dem zweiten Ausführungsbeispiel als Lösungsmittel einen nichtepoxidierten Fettsäureester mit einem hohen Anteil an Doppelbindungen. Dabei sind Fettsäureester mit einer Iod-Zahl größer 100, besonders größer 140 und ganz besonders größer 170, besonders geeignet. Als bindemittelvernetzende Komponente umfaßt das Bindemittel einen nichtepoxidierten Fettsäureester und einen epoxidierten Fettsäureester. Darüber hinaus umfaßt eine Offsetdruckfarbe gemäß dem zweiten Ausführungsbeispiel eine Trockner, um neben einer durch Oxirane bewirkten Trockung eine beschleunigte oxidative Trocknung der Druckfarbe zu bewirken.

Üblicherweise wird eine Druckfarbe dadurch hergestellt, daß die Bestandteile Farbmittel, Bindemittel und Druckhilfsmittel gemischt werden, wobei zuerst eine Vormischung/Vordispergierung stattfindet, indem die Komponenten angerührt und vermischt werden, danach eine Feindispergierung stattfindet, um für eine homogene Benetzung der Pigmente durch das Bindemittel zu sorgen, danach zur Entfernung von Lufteinschlüssen entlüftet wird und schließlich die Druckfarbe abgefüllt wird.

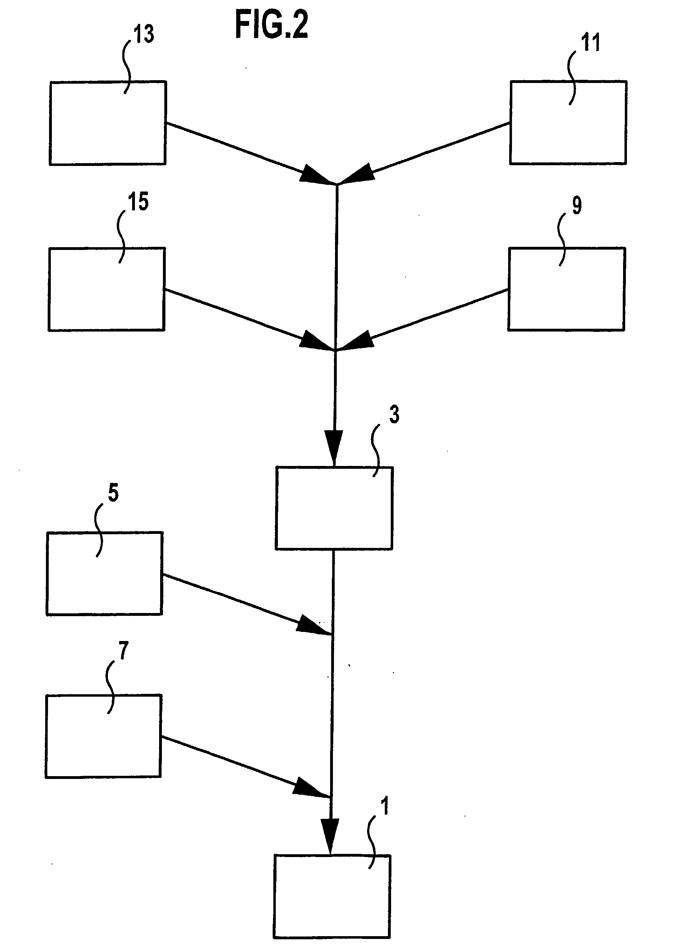

Figur 2 zeigt eine schematisch Darstellung eines Verfahrens zur Herstellung einer erfindungsgemäßen Offsetdruckfarbe 1.

Hartharzbestandteile 11 einer herzustellenden Offsetdruckfarbe 1 werden in einem Lösungsmittel 13, z. B. ein Öl oder ein Ölderivat, bei einer Temperatur von beispielsweise 160°C vollständig aufgelöst.

Danach wird die Mischung aus Hartharz 11 und Lösungsmittel 13 auf eine Temperatur von beispielsweise 80°C abgekühlt.

Dann wird ein Alkydharz 9 und ein epoxidierter Fettsäureester 15 der Mischung zugegeben und darin gelöst.

Der Mischung aus Lösungsmittel 13, Hartharz 11, epoxidiertem Fettsäureester 15 und Alkydharz 9 (Bindemittel 3) werden dann Farbpigmente 5 zugesetzt. Um eine gleichmäßige Verteilung der Farbpigmente 5 im und eine möglichst vollständige Benetzung der Farbpigmente 5 mit dem Bindemittel 3 zu gewährleisten, werden die Farbpigmente 5 im Bindemittel 3 mittels eines Disolvers dispergiert. Danach läßt man die Mischung aus Bindemittel 3 und Farbpigmenten 5 zum Zerkleinern von Pigmentagglomeraten so oft durch eine Dreiwalze laufen, bis die Farbpigmente 5 einen Durchmesser von beispielsweise kleiner 10 µm aufweisen.

Nach dem Mahlvorgang werden der Mischung aus Bindemittel 3 und Farbpigmenten 5 Druckhilfsmittel 7 zugesetzt und in ihr gelöst bzw. dispergiert.

Von einer so hergestellten Druckfarbe wird die Viskosität und der Tack gemessen, welcher ein Maß für die Klebkraft einer Druckfarbe ist, und ihre Konsistenz mit Öl eingestellt.

Die Zugabe von epoxidierten Fettsäureestern 15, Alkydharzen 9, Farbpigmenten 5 und Druckhilfsmitteln 7 zur Mischung aus Hartharz 11 und Lösungsmitteln 13 kann grundsätzlich in beliebiger Reihenfolge erfolgen. Die Farbpigmente müssen jedoch vor und die Scheuerschutzmittel dürfen erst nach dem Mahlvorgang der jeweiligen Mischung zugegeben werden.

Die Zugabe von epoxidierten Fettsäureestern 15, Farbpigmenten 5 und Druckhilfsmitteln 7 zu einer Mischung aus Hartharz 11, Alkydharz 9 und Lösungsmittel 13 kann auch bei Temperaturen unterhalb von 80°C erfolgen. Bei tieferen Temperaturen steigt die Viskosität der Mischung an und man benötigt für die jeweiligen Herstellungsschritte elektrische Geräte mit entsprechend hoher Leistung.

Eine Variante eines ersten Ausführungsbeispiels einer erfindungsgemäßen Offsetdruckfarbe, welche nach dem voranstehenden Verfahren hergestellt wurde, hat die folgende Zusammensetzung:

| | |
|---|---|
| Kokosester: | 23,8 Gew.% |
| aldehydfreies Kolophoniumharz: | 29,2 Gew.% |
| Kokosalkyd: | 18,2 Gew.% |
| epoxidiertes Sojaöl: | 7,7 Gew.% |
| Pigment: | 14,0 Gew.% |
| Füllstoff (Einstellen der Konsistenz): | 4,3 Gew.% |
| Scheuerschutzmittel: | 2,8 Gew.% |

Eine Offsetdruckfarbe mit einer vorstehend genannten Zusammensetzung wurde auf einen Bedruckstoff (Nopa Coat Stratos) aufgedruckt und 24 Stunden getrocknet. Danach wurde ein Scheuertest mit einem Scheuertestgerät der Marke "Prüfbau Quartant" durchgeführt. Dazu wurde auf die Farbseite des Bedruckstoffs ein unbedruckter Teststreifen Nopa Coat Stratos aufgelegt und mit einem Auflagegewicht von 0,5 N/cm² beschwert. Unter den vorstehend genannten Testbedingungen wurde der Teststreifen 100 Mal auf der Farbseite des Bedruckstoffs hin- und hergefahren.

Der Teststreifen wurde dem Scheuertestgerät entnommen und ausgewertet. Dabei wurde zum einen die Menge des Abriebs auf dem Teststreifen und zum anderen die Häufigkeit von Kratz- und Schleifspuren auf der Farbseite des Bedruckstoffs beurteilt.

Die Ergebnisse des Scheuertests einer erfindungsgemäßen Offsetdruckfarbe mit vorstehend genannter Farbzusammensetzung wurde sowohl bezüglich der Menge an Abrieb auf dem Teststreifen als auch bezüglich der Häufigkeit von Kratz- und Schleifspuren auf der Farbseite des Bedruckstoffs als gut eingestuft (wenig Abrieb und geringe Häufigkeit von Kratz- und Schleifspuren).

Mittels Gaschromatographie konnte nachgewiesen werden, daß während des Trocknungsvorgangs der Offsetdruckfarbe nur äußerst geringe Mengen von geruchsbelästigenden oxidierten Spaltprodukten, wie beispielsweise Aldehyde und Ketone, entstehen.

Aufgrund des vorhergehend beschriebenen Effekts der geringen Spaltprodukt-, Aldehyd- und Ketonentwicklung weist die Offsetdruckfarbe ein äußerst geringes Kontaktvergilbungspotential und ein äußerst geringes Matt-/Glanzeffektpotential auf. Kontaktvergilbung und Matt-/Glanzeffekt werden in der Druckersprache häufig pauschal als Geistereffekt bezeichnet.

Eine Variante eines zweiten Ausführungsbeispiels einer erfindungsgemäßen Offsetdruckfarbe, welche nach dem vorstehend genannten Herstellungsverfahren hergestellt wurde, hat die folgende Zusammensetzung:

| | |
|---|---|
| Sojaöl: | 26,7 Gew.% |
| Kolophoniumharz: | 32,7 Gew.% |
| leinöl-/sojaölbasierendes Alkydharz: | 5,2 Gew.% |
| epoxidiertes Sojaöl: | 7,6 Gew.% |
| epoxidiertes Leinöl: | 2,5 Gew.% |
| Farbpigment (Euro Magenta): | 18,3 Gew.% |
| Scheuerschutzmittel: | 2,0 Gew.% |
| Leinöl: | 3,0 Gew.% |
| Trockner: | 1,0 Gew.% |
| (Cobalt-/Manganoctoat) | |
| Freshmittel: | 1,0 Gew.% |

Eine Offsetdruckfarbe mit vorstehend genannter Zusammensetzung wurde auf einen Bedruckstoff (Nopa Coat Stratos) aufgedruckt und 24 Stunden getrocknet.

Danach wurde der Glanz der Farbe bei einer 60 Grad-Reflexion gemessen. Die Zahl der Glanzpunkte der Offsetdruckfarbe mit vorstehend genannter Farbzusammensetzung war dabei größer 70 %.

## Patentansprüche

1. Offsetdruckfarbe, umfassend Farbpigmente und ein Bindemittel für die Farbpigmente, **dadurch gekennzeichnet, daß** das Bindemittel mindestens einen epoxidierten Fettsäureester umfaßt, welcher durch ein Feuchtmittel unter Öffnung eines Oxiranrings aktiviert eine Trocknung der Offsetdruckfarbe einleitet.

2. Offsetdruckfarbe nach Anspruch 1, **dadurch gekennzeichnet, daß** der Anteil an epoxidierten Fettsäureestern in der Offsetdruckfarbe in einem Bereich von ca. 3 bis 40 Gew.% liegt.

3. Offsetdruckfarbe nach Anspruch 1 oder 2, **dadurch gekennzeichnet, daß** ein epoxidierter Fettsäureester einen epoxidierten Trifettsäureester und/oder einen epoxidierten Difettsäureester und/oder einen epoxidierten Monofettsäureester umfaßt.

4. Offsetdruckfarbe nach Anspruch 3, **dadurch gekennzeichnet, daß** ein epoxidierter Trifettsäureester ein epoxidiertes pflanzliches Öl umfaßt.

5. Offsetdruckfarbe nach Anspruch 4, **dadurch gekennzeichnet, daß** ein epoxidiertes pflanzliches Öl epoxidiertes Sojaöl, epoxidiertes Leinöl, epoxidiertes Olivenöl, epoxidiertes Rüböl, epoxidiertes Sonnenblumenöl, epoxidiertes Palmkernöl, epoxidiertes Rapsöl, epoxidiertes Palmöl, epoxidiertes Kokosöl, epoxidiertes Ricinusöl, epoxidiertes Holzöl oder epoxidiertes Safloröl ist.

6. Offsetdruckfarbe nach einem der Ansprüche 3 bis 5, **dadurch gekennzeichnet, daß** eine einem epoxidierten Difettsäureester und/oder eine einem epoxidierten Monofettsäureester zugrundeliegende Fettsäure eine pflanzliche Fettsäure und/oder eine synthetische Carbonsäure ist, wobei mindestens eine zugrundeliegende Säure ungesättigt ist.

7. Offsetdruckfarbe nach Anspruch 6, **dadurch gekennzeichnet, daß** eine einem epoxidierten Difettsäureester und/oder eine einem epoxidierten Monofettsäureester zugrundeliegende pflanzliche Fettsäure Crotonsäure, Ölsäure, Linolsäure, Linolensäure, Eicosapentaensäure, Erucasäure, Sorbinsäure oder Elaeostearinsäure ist.

8. Offsetdruckfarbe nach einem der Ansprüche 3 bis 7, **dadurch gekennzeichnet, daß** die Anzahl der Kohlenstoffatome eines Alkyl-Rests eines epoxidierten Monofettsäureesters im Bereich von 1 bis 20 liegt.

9. Offsetdruckfarbe nach Anspruch 8, **dadurch gekennzeichnet, daß** ein Alkyl-Rest eines Monofettsäureesters ein Methyl-, Ethyl-, Propyl-, Butyl-, tert.-Butyl-, Hexyl- oder Ethylhexyl-Rest ist.

10. Offsetdruckfarbe nach einem der voranstehenden Ansprüche, **dadurch gekennzeichnet, daß** die Offsetdruckfarbe Druckhilfsmittel umfaßt.

11. Offsetdruckfarbe nach Anspruch 10, **dadurch gekennzeichnet, daß** der Anteil an Druckhilfsmitteln in einem Bereich von ca. 0,5 bis 15 Gew.% liegt.

12. Offsetdruckfarbe nach einem der voranstehenden Ansprüche, **dadurch gekennzeichnet, daß** der Anteil an Bindemittel in einem Bereich von 30 bis 85 Gew.%, bezogen auf die Offsetdruckfarbe, liegt.

13. Offsetdruckfarbe nach einem der voranstehenden Ansprüche, **dadurch gekennzeichnet, daß** der Anteil an Farbpigmenten in einem Bereich von 10 bis 45 Gew.%, bezogen auf die Offsetdruckfarbe, liegt.

14. Offsetdruckfarbe nach einem der voranstehenden Ansprüche, **dadurch gekennzeichnet, daß** das Bindemittel mindestens eine Harzkomponente umfaßt.

15. Offsetdruckfarbe nach Anspruch 14, **dadurch gekennzeichnet, daß** eine Harzkomponente ein Harz mit einem Schmelzpunkt größer 120°C umfaßt.

16. Offsetdruckfarbe nach Anspruch 14 oder 15, **dadurch gekennzeichnet, daß** eine Harzkomponente ein Harz mit einem Schmelzpunkt in einem Bereich von 140 bis 220°C umfaßt.

17. Offsetdruckfarbe nach Anspruch 14, 15 oder 16, **dadurch gekennzeichnet, daß** eine Harzkomponente ein Harz mit einem Schmelzpunkt in einem Bereich von 160 bis 180°C umfaßt.

18. Offsetdruckfarbe nach Anspruch 15 bis 17, **dadurch gekennzeichnet, daß** ein Harz ein Hybridharz und/oder ein Kohlenwasserstoffharz und/oder ein phenolmodifiziertes oder pentaerythritverestertes Harz umfaßt.

19. Offsetdruckfarbe nach einem der Ansprüche 14 bis 18, **dadurch gekennzeichnet, daß** der Anteil an Harzkomponenten bezogen auf das Bindemittel in einem Bereich von 30 bis 70 Gew.% liegt.

20. Offsetdruckfarbe nach einem der voranstehenden Ansprüche, **dadurch gekennzeichnet, daß** das Bindemittel mindestens ein Alkydharz mit einem Anteil kleiner 20 Gew.%, bezogen auf die Offsetdruckfarbe, umfaßt.

21. Offsetdruckfarbe nach einem der Ansprüche 10 bis 20, **dadurch gekennzeichnet, daß** die Druckhilfsmittel einen Scheuerschutz umfassen.

22. Offsetdruckfarbe nach Anspruch 21, **dadurch gekennzeichnet, daß** der Anteil an Scheuerschutz bezogen auf die Offsetdruckfarbe kleiner 8 Gew.% ist.

23. Offsetdruckfarbe nach den Ansprüchen 21 oder 22, **dadurch gekennzeichnet, daß** der Scheuerschutz auf Teflon und/oder Polyethylen und/oder Fischer-Tropsch-Wachs in Hartharz und/oder Alkydharz und/oder Öl basiert.

24. Offsetdruckfarbe nach Anspruch 23, **dadurch gekennzeichnet, daß** der Anteil an Teflon und/oder Polyethylen und/oder Fischer-Tropsch-Wachs im Scheuerschutz in einem Bereich von 25 bis 40 Gew.% liegt.

25. Offsetdruckfarbe nach einem der voranstehenden Ansprüche, **dadurch gekennzeichnet, daß** die Viskosität der Offsetdruckfarbe bei 23°C und einer Scherrate von 10 s⁻¹ in einem Bereich von 40 bis 200 Pa·s liegt.

26. Offsetdruckfarbe nach einem der voranstehenden Ansprüche, **dadurch gekennzeichnet, daß** das Bindemittel einen nichtepoxidierten Fettsäureester und/oder ein Mineralöl umfaßt.

27. Offsetdruckfarbe nach Anspruch 26, **dadurch gekennzeichnet, daß** ein nichtepoxidierter Fettsäureester einen Trifettsäureester und/oder einen Difettsäureester und/oder einen Monofettsäureester umfaßt.

28. Offsetdruckfarbe nach Anspruch 26 oder 27, **dadurch gekennzeichnet, daß** ein nichtepoxidierter Fettsäureester eine Iod-Zahl größer 100 aufweist.

29. Offsetdruckfarbe nach einem der Ansprüche 27 bis 29, **dadurch gekennzeichnet, daß** ein nichtepoxidierter Fettsäureester eine Iod-Zahl größer 140 aufweist.

30. Offsetdruckfarbe nach einem der Ansprüche 26 bis 29, **dadurch gekennzeichnet, daß** ein nichtepoxidierter Fettsäureester eine Iod-Zahl größer 170 aufweist.

31. Offsetdruckfarbe nach einem der Ansprüche 10 bis 30, **dadurch gekennzeichnet, daß** die Druckhilfsmittel ein Antioxidans umfassen.

32. Offsetdruckfarbe nach Anspruch 31, **dadurch gekennzeichnet, daß** der Anteil an Antioxidans in einem Bereich von 0,25 bis 3 Gew.%, bezogen auf die Offsetdruckfarbe, liegt.

33. Offsetdruckfarbe nach einem der Ansprüche 10 bis 32, **dadurch gekennzeichnet, daß** die Druckhilfsmittel einen Trockner umfassen.

34. Offsetdruckfarbe nach Anspruch 33, **dadurch gekennzeichnet, daß** der Trockner in einem Lösungsmittel gelöste Metallsalze umfaßt.

35. Offsetdruckfarbe nach Anspruch 33 oder 34, **dadurch gekennzeichnet, daß** der Trockner eine Cobalt-Mangan-Mischung in einem Lösungsmittel umfaßt.

36. Offsetdruckfarbe nach Anspruch 35, **dadurch gekennzeichnet, daß** der Cobaltanteil bei ca. 0,02 bis 1 Gew.% und der Mangananteil bei ca. 0,06 bis 3 Gew.%, bezogen auf die Offsetdruckfarbe, ist.

37. Offsetdruckfarbe nach einem der voranstehenden Ansprüche, **dadurch gekennzeichnet, daß** das Feuchtmittel einen nucleophilen Bestandteil aufweist, welcher den epoxidierten Fettsäureester unter Öffnung eines Oxiranrings aktiviert.

38. Offsetdruckfarbe nach einem der voranstehenden Ansprüche, **dadurch gekennzeichnet, daß** das Feuchtmittel einen anionischen Bestandteil aufweist, welcher den epoxidierten Fettsäureester unter Öffnung eines Oxiranrings aktiviert.

39. Offsetdruckfarbe nach einem der voranstehenden Ansprüche, **dadurch gekennzeichnet, daß** das Feuchtmittel einen elektrophilen Bestandteil aufweist, welcher den epoxidierten Fettsäureester unter Öffnung eines Oxiranrings aktiviert.

40. Offsetdruckfarbe nach einem der voranstehenden Ansprüche, **dadurch gekennzeichnet, daß** das Feuchtmittel einen kationischen Bestandteil aufweist, welcher den epoxidierten Fettsäureester unter Öffnung eines Oxiranrings aktiviert.

41. Offsetdruckfarbe nach einem der voranstehenden Ansprüche, **dadurch gekennzeichnet, daß** das Feuchtmittel Radikale enthält, welche den epoxidierten Fettsäureester unter Öffnung eines Oxiranrings aktivieren.

42. Verwendung von epoxidierten Fettsäureestern für die Herstellung eines Bindemittels für eine Offsetdruckfarbe.

43. Verwendung nach Anspruch 42, **dadurch gekennzeichnet, daß** die Offsetdruckfarbe eine Offsetdruckfarbe gemäß einem der Ansprüche 1 bis 41 ist.

44. Verfahren zur Herstellung einer Offsetdruckfarbe, welche ein Pflanzenöl und/oder ein Pflanzenester und/oder ein Mineralöl, eine Hartharzkomponente, einen epoxidierten Fettsäureester und Farbpigmente enthält, umfassend die folgenden Schritte:
- die Hartharzkomponente wird in dem Pflanzenöl und/oder Pflanzenester und/oder Mineralöl bei einer Temperatur oberhalb von 140°C gelöst und
- das Gemisch aus Hartharzkomponente und Pflanzenöl und/oder Pflanzenester und/oder Mineralöl wird auf eine Temperatur unterhalb von 140°C abgekühlt, bei welcher der epoxidierte Fettsäureester dem vorstehend genannten Gemisch zugesetzt wird.

45. Verfahren nach Anspruch 44, **dadurch gekennzeichnet, daß** dem Gemisch ein Alkydharz zugegeben wird.

## Claims

1. Offset printing ink, comprising colouring pigments and a binding agent for the colouring pigments, **characterized in that** the binding agent comprises at least one epoxidized fatty acid ester, which, activated by a wetting agent with simultaneous opening of an oxirane ring, initiates drying of the offset printing ink.

2. Offset printing ink according to claim 1, **characterized in that** the epoxidized fatty acid ester component in the offset printing ink is in a range of ca. 3 to 40% by weight.

3. Offset printing ink according to claim 1 or 2, **characterized in that** an epoxidized fatty acid ester comprises an epoxidized trifatty acid ester and/or an epoxidized difatty acid ester and/or an epoxidized monofatty acid ester.

4. Offset printing ink according to claim 3, **characterized in that** an epoxidized trifatty acid ester comprises an epoxidized vegetable oil.

5. Offset printing ink according to claim 4, **characterized in that** an epoxidized vegetable oil is epoxidized soybean oil, epoxidized linseed oil, epoxidized olive oil, epoxidized rape oil, epoxidized sunflower oil, epoxidized palm kernel oil, epoxidized rapeseed oil, epoxidized palm oil, epoxidized coconut oil, epoxidized castor oil, epoxidized wood oil or epoxidized safflower oil.

6. Offset printing ink according to one of claims 3 to 5, **characterized in that** a fatty acid forming the basis of an epoxidized difatty acid ester and/or of an epoxidized monofatty acid ester is a vegetable fatty acid and/or a synthetic carboxylic acid, wherein at least one basic acid is unsaturated.

7. Offset printing ink according to claim 6, **characterized in that** a vegetable fatty acid forming the basis of an epoxidized difatty acid ester and/or of an epoxidized monofatty acid ester is crotonic acid, oleic acid, linoleic acid, linolenic acid, eicosane-pentaenoic acid, erucic acid, sorbic acid or elaeostearic acid.

8. Offset printing ink according to one of claims 3 to 7, **characterized in that** the number of carbon atoms of an alkyl residue of an epoxidized monofatty acid ester is in the region of 1 to 20.

9. Offset printing ink according to claim 8, **characterized in that** an alkyl residue of a monofatty acid ester is a methyl-, ethyl-, propyl-, butyl-, tertiary butyl-, hexyl- or ethyl hexyl residue.

10. Offset printing ink according to one of the preceding claims, **characterized in that** the offset printing ink comprises print-assisting agents.

11. Offset printing ink according to claim 10, **characterized in that** the print-assisting agent component is in a range of ca. 0.5 to 15% by weight.

12. Offset printing ink according to one of the preceding claims, **characterized in that** the binding agent component is in a range of 30 to 85% by weight, in relation to the offset printing ink.

13. Offset printing ink according to one of the preceding claims, **characterized in that** the colouring pigment component is in a range of 10 to 45% by weight, in relation to the offset printing ink.

14. Offset printing ink according to one of the preceding claims, **characterized in that** the binding agent comprises at least one resin constituent.

15. Offset printing ink according to claim 14, **characterized in that** a resin constituent comprises a resin having a melting point higher than 120°C.

16. Offset printing ink according to claim 14 or 15, **characterized in that** a resin constituent comprises a resin having a melting point in a range of 140 to 220°C.

17. Offset printing ink according to claim 14, 15 or 16, **characterized in that** a resin constituent comprises a resin having a melting point in a range of 160 to 180°C.

18. Offset printing ink according to claim 15 to 17, **characterized in that** a resin comprises a hybrid resin and/or a hydrocarbon resin and/or a phenol-modified or pentaerythritol-esterified resin.

19. Offset printing ink according to one of claims 14 to 18, **characterized in that** the resin constituent component in relation to the binding agent is in a range of 30 to 70% by weight.

20. Offset printing ink according to one of the preceding claims, **characterized in that** the binding agent comprises at least one alkyd resin in a proportion of less than 20% by weight, in relation to the offset printing ink.

21. Offset printing ink according to one of claims 10 to 20, **characterized in that** the print-assisting agents comprise an anti-abrasion agent.

22. Offset printing ink according to claim 21, **characterized in that** the anti-abrasion agent component is less than 8% by weight in relation to the offset printing ink.

23. Offset printing ink according to claims 21 or 22, **characterized in that** the anti-abrasion agent is based on Teflon and/or polyethylene and/or Fischer-Tropsch wax in hardened resin and/or alkyd resin and/or oil.

24. Offset printing ink according to claim 23, **characterized in that** the Teflon and/or polyethylene and/or Fischer-Tropsch wax component in the anti-abrasion agent is in a range of 25 to 40% by weight.

25. Offset printing ink according to one of the preceding claims, **characterized in that** the viscosity of the offset printing ink at 23°C and a shear rate of 10s⁻¹ is in a range of 40 to 200 Pa.s.

26. Offset printing ink according to one of the preceding claims, **characterized in that** the binding agent comprises a non-epoxidized fatty acid ester and/or a mineral oil.

27. Offset printing ink according to claim 26, **characterized in that** a non-epoxidized fatty acid ester comprises a trifatty acid ester and/or a difatty acid ester and/or a monofatty acid ester.

28. Offset printing ink according to claim 26 or 27, **characterized in that** a non-epoxidized fatty acid ester has an iodine number greater than 100.

29. Offset printing ink according to one of claims 27 to 29, **characterized in that** a non-epoxidized fatty acid ester has an iodine number greater than 140.

30. Offset printing ink according to one of claims 26 to 29, **characterized in that** a non-epoxidized fatty acid ester has an iodine number greater than 170.

31. Offset printing ink according to one of claims 10 to 30, **characterized in that** the print-assisting agents comprise an antioxidant.

32. Offset printing ink according to claim 31, **characterized in that** the antioxidant component is in a range of 0.25 to 3% by weight, in relation to the offset printing ink.

33. Offset printing ink according to one of claims 10 to 32, **characterized in that** the print-assisting agents comprise a drying agent.

34. Offset printing ink according to claim 33, **characterized in that** the drying agent comprises metallic salts dissolved in a solvent.

35. Offset printing ink according to claim 33 or 34, **characterized in that** the drying agent comprises a cobalt-manganese mixture in a solvent.

36. Offset printing ink according to claim 35, **characterized in that** the cobalt component is ca. 0.02 to 1% by weight and the manganese component is ca. 0.06 to 3% by weight, in relation to the offset printing ink.

37. Offset printing ink according to one of the preceding claims, **characterized in that** the wetting agent comprises a nucleophilic constituent, which activates the epoxidized fatty acid ester with simultaneous opening of an oxirane ring.

38. Offset printing ink according to one of the preceding claims, **characterized in that** the wetting agent comprises an anionic constituent, which activates the epoxidized fatty acid ester with simultaneous opening of an oxirane ring.

39. Offset printing ink according to one of the preceding claims, **characterized in that** the wetting agent comprises an electrophilic constituent, which activates the epoxidized fatty acid ester with simultaneous opening of an oxirane ring.

40. Offset printing ink according to one of the preceding claims, **characterized in that** the wetting agent comprises a cationic constituent, which activates the epoxidized fatty acid ester with simultaneous opening of an oxirane ring.

41. Offset printing ink according to one of the preceding claims, **characterized in that** the wetting agent comprises radicals, which activate the epoxidized fatty acid ester with simultaneous opening of an oxirane ring.

42. Use of epoxidized fatty acid esters to manufacture a binding agent for an offset printing ink.

43. Use according to claim 42, **characterized in that** the offset printing ink is an offset printing ink according to one of claims 1 to 41.

44. Method of manufacturing an offset printing ink, which contains a vegetable oil and/or a vegetable ester and/or a mineral oil, a hardened resin constituent, an epoxidized fatty acid ester and colouring pigments, comprising the following steps:
- a hardened resin constituent is dissolved in the vegetable oil and/or vegetable ester and/or mineral oil at a temperature above 140°C and
- the mixture of hardened resin constituent and vegetable oil and/or vegetable ester and/or mineral oil is cooled to a temperature below 140°C, at which the epoxidized fatty acid ester is added to the previously described mixture.

45. Method according to claim 44, **characterized in that** an alkyd resin is added to the mixture.

## Revendications

1. Encre pour impression offset comprenant des pigments colorants et un liant destiné auxdits pigments colorants, **caractérisée en ce que** le liant comprend un ester époxydé d'acide gras au moins introduisant un séchage de ladite encre pour impression offset au moyen d'un agent mouillant activé par l'ouverture d'un anneau oxyrane.

2. Encre pour impression offset selon la revendication 1, **caractérisée en ce que** le pourcentage d'esters époxydés d'acide gras dans l'encre pour impression offset se situe dans une plage allant de 3 à 40 % en poids environ.

3. Encre pour impression offset selon la revendication 1 ou 2, **caractérisée en ce qu'**un ester époxydé d'acide gras comprend un triester époxydé d'acide gras et/ou un diester époxydé d'acide gras et/ou un monoester époxydé d'acide gras.

4. Encre pour impression offset selon la revendication 3, **caractérisée en ce qu'**un triester époxydé d'acide gras comprend une huile végétale époxydée.

5. Encre pour impression offset selon la revendication 4, **caractérisée en ce qu'**une huile végétale époxydée est de l'huile de soja époxydée, de l'huile de lin époxydée, de l'huile d'olive époxydée, de l'huile de navette époxydée, de l'huile de tournesol époxydée, de l'huile de palmiste époxydée, de l'huile de colza époxydée, de l'huile de palme époxydée, de l'huile de coco époxydée, de l'huile de ricin époxydée, de l'huile de bois époxydée ou de l'huile de carthame époxydée.

6. Encre pour impression offset selon l'une quelconque des revendications 3 à 5, **caractérisée en ce qu'**un acide gras qui est sur la base d'un diester époxydé d'acide gras et/ou qu'un acide gras qui est sur la base d'un monoester époxydé d'acide gras est un acide gras végétal et/ou un acide carboxylique synthétique, l'un des acides gras de base au moins étant non saturé.

7. Encre pour impression offset selon la revendication 6, **caractérisée en ce qu'**un acide gras végétal qui est sur la base d'un diester époxydé d'acide gras et/ou qu'un acide gras végétal qui est sur la base d'un monoester époxydé d'acide gras est de l'acide crotonique, de l'acide oléique, de l'acide linoléique, de l'acide linolénique, de l'acide eicosapentaénoïque, de l'acide érucique, de l'acide sorbique ou de l'acide élaéostéarique.

8. Encre pour impression offset selon l'une quelconque des revendications 3 à 7, **caractérisée en ce que** le nombre d'atomes de carbone d'un radical alkyle d'un monoester époxydé d'acide gras se situe dans une plage de 1 à 20.

9. Encre pour impression offset selon la revendication 8, **caractérisée en ce qu'**un radical alkyle d'un monoester d'acide gras est un radical méthyle, éthyle, propyle, butyle, tert-butyle, hexyle ou éthyle hexyle.

10. Encre pour impression offset selon l'une quelconque des revendications précédentes, **caractérisée en ce que** ladite encre pour impression offset comprend des adjuvants d'impression.

11. Encre pour impression offset selon la revendication 10, **caractérisée en ce que** le pourcentage d'adjuvants d'impression se situe dans une plage de 0,5 à 15 % en poids environ.

12. Encre pour impression offset selon l'une quelconque des revendications précédentes, **caractérisée en ce que** le pourcentage de liants se situe dans une plage de 30 à 85 % en poids, rapporté à l'encre pour impression offset.

13. Encre pour impression offset selon l'une quelconque des revendications précédentes, **caractérisée en ce que** le pourcentage de pigments colorants se situe dans une plage de 10 à 45 % en poids, rapporté à l'encre pour impression offset.

14. Encre pour impression offset selon l'une quelconque des revendications précédentes, **caractérisée en ce que** le liant comprend un composant résine au moins.

15. Encre pour impression offset selon la revendication 14, **caractérisée en ce qu'**un composant résine comprend une résine dont le point de fusion est supérieur à 120°C.

16. Encre pour impression offset selon la revendication 14 ou 15, **caractérisée en ce qu'**un composant résine comprend une résine dont le point de fusion se situe dans une plage de 140 à 220°C.

17. Encre pour impression offset selon la revendication 14, 15 ou 16, **caractérisée en ce qu'**un composant résine comprend une résine dont le point de fusion se situe dans une plage de 160 à 180°C.

18. Encre pour impression offset selon les revendications 15 à 17, **caractérisée en ce qu'**une résine comprend une résine hydride et/ou une résine hydrocarbure et/ou une résine phénolique modifiée ou une résine pentaérythritol estérifiée.

19. Encre pour impression offset selon l'une quelconque des revendications 14 à 18, **caractérisée en ce que** le pourcentage de composants résine, rapporté au liant, se situe dans une plage de 30 à 70 % en poids.

20. Encre pour impression offset selon l'une quelconque des revendications précédentes, **caractérisée en ce que** le liant comprend une résine alkyde au moins, avec un pourcentage inférieur à 20 % en poids, rapporté à l'encre pour impression offset.

21. Encre pour impression offset selon l'une quelconque des revendications 10 à 20, **caractérisée en ce que** les adjuvants comprennent un antiabrasif.

22. Encre pour impression offset selon la revendication 21, **caractérisée en ce que** le pourcentage d'antiabrasif, rapporté à l'encre pour impression offset, est inférieur à 8 % en poids.

23. Encre pour impression offset selon les revendications 21 ou 22, **caractérisée en ce que** l'antiabrasif se base sur du téflon et/ou du polyéthylène et/ou de la cire Fischer-Tropsch dans de la résine durcie et/ou de la résine alkyde et/ou de l'huile.

24. Encre pour impression offset selon la revendication 23, **caractérisée en ce que** le pourcentage de téflon et/ou de polyéthylène et/ou de cire Fischer-Tropsch dans l'antiabrasif se situe dans une plage de 25 à 40 % en poids.

25. Encre pour impression offset selon l'une quelconque des revendications précédentes, **caractérisée en ce que** la viscosité de ladite encre pour impression offset, à 23°C et compte tenu d'un taux de cisaillement de 10 s⁻¹ se situe dans une plage de 40 à 200 Pa s.

26. Encre pour impression offset selon l'une quelconque des revendications précédentes, **caractérisée en ce que** le liant comprend un ester d'acide gras non époxydé et/ou une huile minérale.

27. Encre pour impression offset selon la revendication 26, **caractérisée en ce qu'**un ester d'acide gras non époxydé comprend un triester d'acide gras et/ou un diester d'acide gras et/ou un monoester d'acide gras.

28. Encre pour impression offset selon la revendication 26 ou 27, **caractérisée en ce qu'**un ester d'acide gras non époxydé comporte un indice d'iode supérieur à 100.

29. Encre pour impression offset selon l'une quelconque des revendications 27 à 29, **caractérisée en ce qu'**un ester d'acide gras non époxydé comporte un indice d'iode supérieur à 140.

30. Encre pour impression offset selon l'une quelconque des revendications 26 à 29, **caractérisée en ce qu'**un ester d'acide gras non époxydé comporte un indice d'iode supérieur à 170.

31. Encre pour impression offset selon l'une quelconque des revendications 10 à 30, **caractérisée en ce que** les adjuvants d'impression comprennent un antioxydant.

32. Encre pour impression offset selon la revendication 31, **caractérisée en ce que** le pourcentage d'antioxydant se situe dans une plage de 0,25 à 3 % en poids, rapporté à l'encre pour impression offset.

33. Encre pour impression offset selon l'une quelconque des revendications 10 à 32, **caractérisée en ce que** les adjuvants d'impression comportent un siccatif.

34. Encre pour impression offset selon la revendication 33, **caractérisée en ce que** le siccatif comprend des sels métalliques dissous dans un solvant.

35. Encre pour impression offset selon la revendication 33 ou 34, **caractérisée en ce que** le siccatif comprend un mélange de cobalt-manganèse dans un solvant.

36. Encre pour impression offset selon la revendication 35, **caractérisée en ce que** le pourcentage de cobalt se situe dans une plage de 0,02 à 1 % en poids environ et le pourcentage de manganèse dans une plage de 0,06 à 3 % en poids environ, rapporté à l'encre pour impression offset.

37. Encre pour impression offset selon l'une quelconque des revendications précédentes, **caractérisée en ce que** l'agent mouillant comporte un constituant nucléophile lequel active l'ester époxydé d'acide gras en ouvrant un anneau oxyrane.

38. Encre pour impression offset selon l'une quelconque des revendications précédentes, **caractérisée en ce** l'agent mouillant comporte un constituant anionique lequel active l'ester époxydé d'acide gras en ouvrant un anneau oxyrane.

39. Encre pour impression offset selon l'une quelconque des revendications précédentes, **caractérisée en ce** l'agent mouillant comporte un constituant électrophile lequel active l'ester époxydé d'acide gras en ouvrant un anneau oxyrane.

40. Encre pour impression offset selon l'une quelconque des revendications précédentes, **caractérisée en ce** l'agent mouillant comporte un constituant cationique lequel active l'ester époxydé d'acide gras en ouvrant un anneau oxyrane.

41. Encre pour impression offset selon l'une quelconque des revendications précédentes, **caractérisée en ce** l'agent mouillant comporte des radicaux lesquels activent l'ester époxydé d'acide gras en ouvrant un anneau oxyrane.

42. Utilisation d'esters époxydés d'acides gras pour la fabrication d'un liant destiné à une encre pour impression offset.

43. Utilisation selon la revendication 42, **caractérisée en ce que** l'encre pour impression offset est une encre pour impression offset conforme à l'une des revendications 1 à 41.

44. Procédé de fabrication d'une encre pour impression offset contenant une huile végétale, et/ou un ester végétal et/ou une huile minérale, un composant résine durcie, un ester époxydé d'acide gras et des pigments colorants, comportant les étapes suivantes :
• on dissout le composant résine durcie dans l'huile végétale et/ou l'ester végétal et/ou l'huile minérale à une température supérieure à 140°C, et
• on fait refroidir le mélange de composant résine durcie et d'huile végétale et/ou d'ester végétal et/ou d'huile minérale à une température inférieure à 140°C, en présence de laquelle on ajoute l'ester époxydé d'acide gras au mélange mentionné ci-dessus.

45. Procédé selon la revendication 44, **caractérisé en ce que** l'on ajoute au mélange une résine alkyde.
